(19) Europäisches Patentamt
European Patent Office
Office européen des brevets

(11) **EP 2 650 698 B1**

(12) **EUROPÄISCHE PATENTSCHRIFT**

(45) Veröffentlichungstag und Bekanntmachung des Hinweises auf die Patenterteilung:
**21.12.2016 Patentblatt 2016/51**

(51) Int Cl.:
**G01S 19/20** (2010.01)

(21) Anmeldenummer: **13001777.5**

(22) Anmeldetag: **06.04.2013**

(54) **Verbesserung des Integritätskonzepts eines Satellitennavigationssystems**

Improvement of the integrity concept of a satellite navigation system

Amélioration du concept d'intégrité d'un système de navigation par satellite

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.04.2012 DE 102012007191**

(43) Veröffentlichungstag der Anmeldung:
**16.10.2013 Patentblatt 2013/42**

(73) Patentinhaber: **Airbus DS GmbH**
**82024 Taufkirchen (DE)**

(72) Erfinder: **Trautenberg, Hans L., Dr.**
**50823 Köln (DE)**

(74) Vertreter: **Frenkel, Matthias Alexander et al**
**Wuesthoff & Wuesthoff**
**Patentanwälte PartG mbB**
**Schweigerstrasse 2**
**81541 München (DE)**

(56) Entgegenhaltungen:
**EP-A1- 2 402 785**

- OEHLER V ET AL: "The Galileo Integrity Concept", ION GNSS. INTERNATIONAL TECHNICAL MEETING OF THE SATELLITEDIVISION OF THE INSTITUTE OF NAVIGATION, WASHINGTON, DC, US, 21. September 2004 (2004-09-21), Seiten 604-615, XP002375520,

EP 2 650 698 B1

**Beschreibung**

Die Erfindung betrifft ein Verfahren und eine Vorrichtung zum Ermitteln des Integritätsrisikos an einer Alarmschranke von einer mit einem Satellitennavigationssystem ermittelten Positionslösung gemäß Anspruch 1 bzw. 7.

Integrität gewinnt für Satellitennavigationssysteme immer mehr an Bedeutung, insbesondere für sicherheitskritische Anwendungen wie eine auf Satellitennavigation basierende Flugnavigation. Ein Konzept zur Bereitstellung von Integrität bei einem Satellitennavigationssystem besteht darin, die Satelliten vom Boden aus kontinuierlich zu überwachen und Daten zu den überwachten Satelliten beispielsweise mit den von den Satelliten ausgestrahlten Navigationssignalen an Nutzungssysteme des Satellitennavigationssystems zu übertragen. Ein Nutzungssystem kann durch diese Daten in die Lage versetzt werden, sein individuelles Integritätsrisiko zu berechnen und beispielsweise eine Warnung auszugeben oder eine Navigationsoperation abzubrechen oder erst gar nicht zu beginnen.

Die Daten zu den überwachten Satelliten können vor allem statistische Beschreibungen von Eigenschaften der ausgestrahlten Signale der Satelliten SIS (Signal-In-Space) sein. Insbesondere können die statistischen Beschreibungen Verteilungen von SIS-Fehlern betreffen, so dass ein Nutzungssystem ein Integritätsrisiko anhand dieser Verteilung abschätzen kann.

Beispielsweise wird im zukünftigen europäischen Satellitennavigationssystem Galileo ein Integritätsdatenstrom bereit stehen, der es ermöglicht, System- oder Satellitenausfälle an Nutzungssysteme zu signalisieren. Insbesondere können fehlerhafte Satellitensignale mit Integritätswarnungen versehen werden (System-Warnmechanismus). Weiterhin ist vorgesehen, statistische Beschreibungen von SIS-Eigenschaften mit dem Integritätsdatenstrom zu übertragen, so dass Nutzungssysteme ihr Integritätsrisiko ermitteln können (Nutzer-Integritätskonzept).

Das Integritätskonzepts von Galileo und dessen Grundzüge sind in der Veröffentlichung "The Galileo Integrity Concept", V. Oehler, F. Luongo, J.-P. Boyero, R. Stalford, H. L. Trautenberg, ION GNSS 17th International Technical Meeting of the Satellite Division, 21-24 Sept. 2004, Long Beach, CA, in der veröffentlichten europäischen Patentanmeldung EP 1 637 899 A1 und dem erteilten europäischen Patent EP 1 792 196 B1 im Detail beschrieben. Im Folgenden werden für das Verständnis der vorliegenden Erfindung hilfreiche Details des Galileo-Integritätskonzeptes nochmals erläutert.

Das Galileo-Integritätskonzept sieht vor, dass die "Processing Facility" des Bodensegments von Galileo eine Vorhersage über die Genauigkeit von Navigationssignalen macht. Diese Vorhersage ist eine statistische Beschreibung des Signalfehlers und wird als erwarteter Signalfehler oder Signal In Space Accuracy (SISA) bezeichnet.

Die tatsächlichen Fehler der einzelnen, von Satelliten ausgesandten Navigationssignale oder Signal In Space Errors (SISE) werden durch Beobachtungen des Monitoring-Netzwerkes des Galileo-Systems geschätzt. Die geschätzten Fehler werden als estimated SISE (eSISE) bezeichnet.

Im Rahmen des Galileo-Integritätskonzepts ist nun vorgesehen, dass ein Satellit über einen Alarm (IF: Integrity Flag) auf nicht benutzbar gesetzt wird, sobald der geschätzte Signalfehler (eSISE) dieses Satelliten größer als eine Integritätsalarmschranke (TH: Threshold) ist. Solche Alarme werden an die Nutzungssysteme von Galileo als Systemwarnungen übertragen.

Da die Schätzung eSISE des SISE ein fehlerträchtiger Prozess ist, wird in der Regel angenommen, dass die Verteilung des aktuellen SISE um den Wert des geschätzten SISE eSISE mit einer Gaussverteilung mit der Standardabweichung beschrieben werden kann, die als Signal-In-Space-Monitoring-Accuracy (SISMA) bezeichnet wird. SISMA stellt demnach eine statistische Beschreibung der Genauigkeit der Schätzung eSISE des SISE für einen Satelliten dar.

Beim Galileo-Integritätskonzept ist vorgesehen, die beiden statistischen Beschreibungen SISA und SISMA an Nutzungssysteme zu übertragen, die dann anhand dieser Werte ihr individuelles Integritätsrisiko im Rahmen des Nutzer-Integritätskonzeptes berechnen können.

Für das Galileo-Integritätskonzept und die Berechnung des Integritätsrisikos wird nun für jeden Satellit angenommen, dass ein Satellit in einem der folgenden Zustände ist:

Zustand 1: Der Satellit ist fehlerfrei und auch die statistische Beschreibung des fehlerfreien Satelliten ist korrekt. Das bedeutet im Fall von Galileo, dass der Fehlerwahrscheinlichkeitsverteilung des Satelliten durch den SISA-Wert von Galileo overbounded wird.

Zustand 2: Der Satellit ist fehlerbehaftet und bezüglich der statistischen Beschreibung des fehlerhaften Satelliten wird angenommen, dass der Satellit einen positiven oder negativen Grundfehler der Größe TH hat, sich der gesamte Fehler aus dem Grundfehler und einem Zusatzfehler zusammensetzt, und im Fall von Galileo die Wahrscheinlichkeitsverteilung des Zusatzfehlers durch den SISMA-Wert von Galileo overbounded wird. Beim Galileo-Integritätskonzept wird der Grundfehler bzw. die Integritätsalarmschranke TH als ein Produkt eines Vorfaktors und der Wurzel der Summe der Quadrate von SISA und SISMA wie folgt berechnet:

$$TH = k_{pfa} \cdot \sqrt{SISA^2 + SISMA^2}$$

Der Vorfaktor $k_{pfa}$ wird hierbei durch die erlaubte Falschalarmrate bestimmt.

Als Nutzer-Integritätskonzept hat sich für Galileo die Berechnung des Integritätsrisikos an einer sogenannten Alarmschranke AL als praktikabel erwiesen (für den horizontalen und vertikalen Fall werden hierbei unterschiedliche Alarmschranken HAL bzw. VAL betrachtet). Hierfür wird angenommen, dass sich entweder alle n Satelliten, die ein Nutzungssystem verwendet, im Zustand 1 befinden, oder sich jeweils alle bis auf einen Satelliten im Zustand 1 befinden und sich der eine Satellit nur im Zustand 2 befindet.

Das Integritätsrisiko wird nun als das gewichtete Mittel der n+1 möglichen Zustände (n Zustände 2, bei denen jeweils einer der n Satelliten als sich im Zustand 2 befindlich angenommen wird, und 1 Zustand 1, bei dem alle Satelliten als sich im Zustand 1 befindlich angenommen werden) berechnet, wobei zur Vereinfachung das Gewicht für den Zustand, in welchem sich alle Satelliten im Zustand 1 befinden, häufig als 1 angenommen wird und das Gewicht für jeden der n Zustände, in welchem jeweils ein Satellit in Zustand 2 ist, als p_failed angenommen wird. Das Integritätsrisiko aus den anderen möglichen Zuständen des Systems wird mit einem konstanten additiven Term im Integritätsrisiko an der Alarmschranke berücksichtigt. Bei großem SISMA führt dies jedoch zu einer verringerten Verfügbarkeit.

Die EP 2 402 785 A1 offenbart einen RAIM-Algorithmus zur Bestimmung eines Integritätsrisikos in einem GNSS durch Verarbeiten mehrerer von Satelliten des GNSS empfangener Signale mit den folgenden Handlungen: Bestimmung mehrerer Integritätsrisiken bei einer Alarmschranke für unterschiedliche Fehlerzustände der Signale, und Bestimmen eines Gesamtintegritätsrisikos an der Alarmschranke aus den ermittelten mehreren Integritätsrisiken.

Es ist nun eine Aufgabe der vorliegenden Erfindung, ausgehend von dem vorstehend erläuterten Integritätskonzept die Verfügbarkeit einer mit einem Satellitennavigationssystem ermittelten Positionslösung mit einem Integritätsrisiko an einer Alarmschranke zu erhöhen.

Diese Aufgabe wird durch ein Verfahren und eine Vorrichtung zum Ermitteln des Integritätsrisikos an einer Alarmschranke von einer mit einem Satellitennavigationssystem ermittelten Positionslösung mit den Merkmalen von Anspruch 1 bzw. 7 gelöst. Weitere Ausgestaltungen der Erfindung sind Gegenstand der abhängigen Ansprüche.

Um die Verfügbarkeit einer mit einem Satellitennavigationssystem ermittelten Positionslösung mit einem Integritätsrisiko an einer Alarmschranke zu erhöhen, wird nach der Erfindung der ungewichtete Beitrag zum Integritätsrisiko an der Alarmschranke unter der Annahme, dass Satellit j fehlerbehaftet ist, unter zwei verschieden Annahmen berechnet, und das Minimum der beiden berechneten Beiträge verwendet. Das erste Integritätsrisiko an der Alarmschranke wird unter den klassischen und eingangs geschilderten Annahmen berechnet, dass der Satellit j als durch Zustand 2 beschrieben angenommen wird. Das zweite Integritätsrisiko an der Alarmschranke wird wie folgt berechnet: Die Differenz zwischen der Positionslösung mit allen Satelliten und der Positionslösung mit dem aus der Positionslösung entfernten Satelliten j wird von der Alarmschranke abgezogen, und dann wird das Integritätsrisiko mit den n-1 Satelliten, die durch Zustand 1 beschrieben sind, an der reduzierten Alarmschranke berechnet.

Eine Ausführungsform der Erfindung betrifft nun ein Verfahren zum Ermitteln des Integritätsrisikos an einer Alarmschranke von einer mit einem Satellitennavigationssystem ermittelten Positionslösung, wobei von Satelliten des Satellitennavigationssystems empfangene Signale zum Ermitteln der Positionslösung verarbeitet werden und das Verfahren durch die folgenden Schritte gekennzeichnet ist:

    Berechnen eines ersten Integritätsrisikos an der Alarmschranke unter der Annahme, dass ein Satellit j der Satelliten fehlerbehaftet ist;

    Ermitteln einer ersten Positionslösung mit den von allen Satelliten empfangenen Signalen;

    Ermitteln einer zweiten Positionslösung mit den von allen Satelliten empfangenen Signalen außer dem vom Satelliten j empfangenen Signal;

    Ermitteln einer Differenz zwischen der ersten und der zweiten Positionslösung;

    Bilden einer reduzierten Alarmschranke durch Subtrahieren der ermittelten Differenz von der Alarmschranke;

    Berechnen eines zweiten Integritätsrisikos an der reduzierten Alarmschranke mit den von allen Satelliten empfangenen Signalen außer dem vom Satelliten j empfangenen Signal; und

    Ermitteln des Integritätsrisikos an der Alarmschranke unter Verwendung des Minimums des ersten und des zweiten Integritätsrisikos.

Das Integritätsrisiko an der Alarmschranke kann vor allem unter Verwendung des Minimums des ersten und des zweiten Integritätsrisikos als ungewichteten Beitrag gemäß dem Nutzer-Integritätskonzept des Satellitennavigationssystems Galileo ermittelt werden.

Weiterhin können vom Satellitennavigationssystem bereitgestellte statistische Beschreibungen bezüglich Signalfehlern jedes Satelliten verarbeitet werden, indem daraus für einen fehlerbehafteten Satelliten ein Grundfehler ermittelt wird, der für die Einstufung eines Satelliten als fehlerbehaftet ausgewertet wird.

Als statistische Beschreibungen bezüglich Signalfehlern jedes Satelliten können

der erwartete Signalfehler bzw. der Signal In Space Accuracy SISA-Wert für jedes Satellitensignal und
die Genauigkeit der Schätzung des Signalfehlers bzw. der Signal-In-Space-Monitoring-Accuracy SISMA-Wert für jedes Satellitensignal
verarbeitet werden, indem für jeden Satelliten der Grundfehler TH gemäß der folgenden Gleichung berechnet wird:

$$TH = k_{pfa} \cdot \sqrt{SISA^2 + SISMA^2}$$

wobei der Vorfaktor $k_{pfa}$ durch eine erlaubte Falschalarmrate bestimmt wird.

Eine weitere Ausführungsform der Erfindung betrifft ein Computerprogramm mit Programmcode zur Durchführung aller Verfahrensschritte nach der Erfindung und wie vorstehend beschrieben, wenn das Computerprogramm in einem Computer ausgeführt wird.

Ferner betrifft eine Ausführungsform der Erfindung einen Datenträger, auf dem der von einem Computer ausführbare Programmcode des Computerprogramms nach der Erfindung und wie vorstehend beschrieben gespeichert ist.

In einer weiteren Ausführungsform betrifft die Erfindung eine Vorrichtung zum Ermitteln des Integritätsrisikos an einer Alarmschranke von einer mit einem Satellitennavigationssystem ermittelten Positionslösung, wobei die Vorrichtung zum Verarbeiten von von Satelliten des Satellitennavigationssystems empfangenen Signalen zum Ermitteln der Positionslösung ausgebildet ist und gekennzeichnet ist durch erste Mittel zum Berechnen eines ersten Integritätsrisikos an der Alarmschranke unter der Annahme, dass ein Satellit j der Satelliten fehlerbehaftet ist,
zweite Mittel zum Ermitteln einer ersten Positionslösung mit den von allen Satelliten empfangenen Signalen,
dritte Mittel zum Ermitteln einer zweiten Positionslösung mit den von allen Satelliten empfangenen Signalen außer dem vom Satelliten j empfangenen Signal,
vierte Mittel zum Ermitteln einer Differenz zwischen der ersten und der zweiten Positionslösung,
fünfte Mittel zum Bilden einer reduzierten Alarmschranke durch Subtrahieren der ermittelten Differenz von der Alarmschranke,
sechste Mittel zum Berechnen eines zweiten Integritätsrisikos an der reduzierten Alarmschranke mit den von allen Satelliten empfangenen Signalen außer dem vom Satelliten j empfangenen Signal und
siebte Mittel zum Ermitteln des Integritätsrisikos an der Alarmschranke unter Verwendung des Minimums des ersten und des zweiten Integritätsrisikos.

Die ersten bis siebten Mittel können zumindest teilweise durch einen programmierbaren Prozessor und ein in einem Speicher abgelegtes Programm zum Konfigurieren des programmierbaren Prozessors zum Durchführen eines oder mehrerer Schritte eines Verfahrens nach der Erfindung und wie oben beschrieben implementiert sein.

Schließlich betrifft eine Ausführungsform der Erfindung eine Positionsbestimmungsvorrichtung zum Ermitteln einer Position anhand von Signalen eines Satellitennavigationssystems und zum Ermitteln eines Integritätsrisikos an einer Alarmschranke für die ermittelte Position, wobei die Positionsbestimmungsvorrichtung eine Vorrichtung zum Ermitteln des Integritätsrisikos an einer Alarmschranke von einer mit einem Satellitennavigationssystem ermittelten Positionslösung nach der Erfindung und wie vorstehend beschrieben und ein Ausgabemittel zum Ausgeben eines ermittelten Integritätsrisikos aufweist.

Das Ausgabemittel kann insbesondere ein oder mehreres der folgenden Mittel aufweisen: eine Anzeigeeinrichtung; eine Datenausgabeschnittstelle; eine Audioausgabeeinheit.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in

Fig. 1 ein Flussdiagramm eines Ausführungsbeispiels eines Verfahrens zum Ermitteln des Integritätsrisikos an einer Alarmschranke von einer mit einem Satellitennavigationssystem ermittelten Positionslösung gemäß der Erfindung; und in

Fig. 2 ein Blockschaltbild einer Positionsbestimmungsvorrichtung gemäß der Erfindung, die Signale von vier Satelliten eines Satellitennavigationssystems empfängt und zur Positionsbestimmung auswertet.

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht als die Erfindung einschränkend zu verstehen.

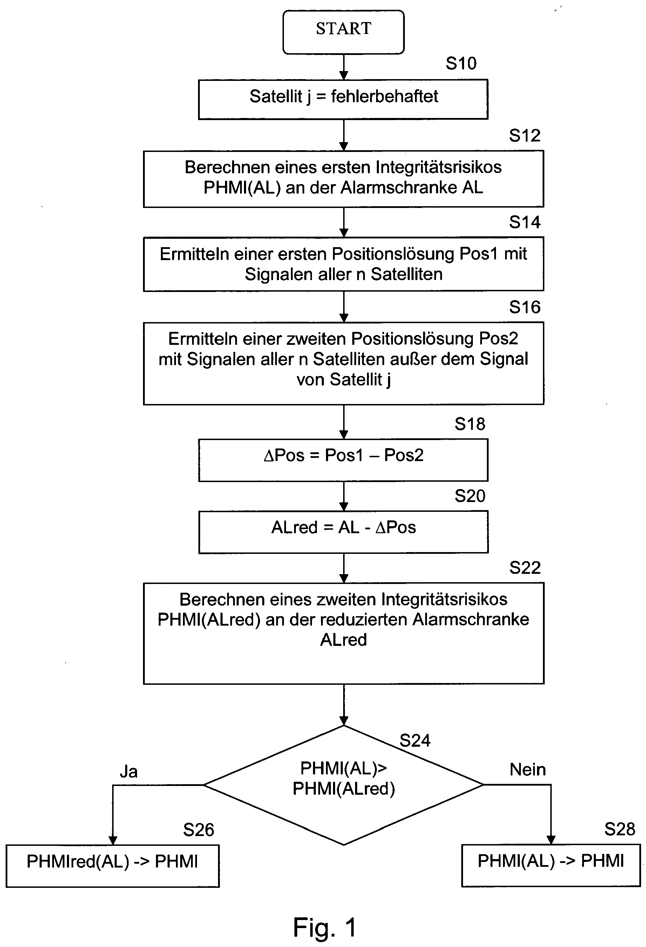

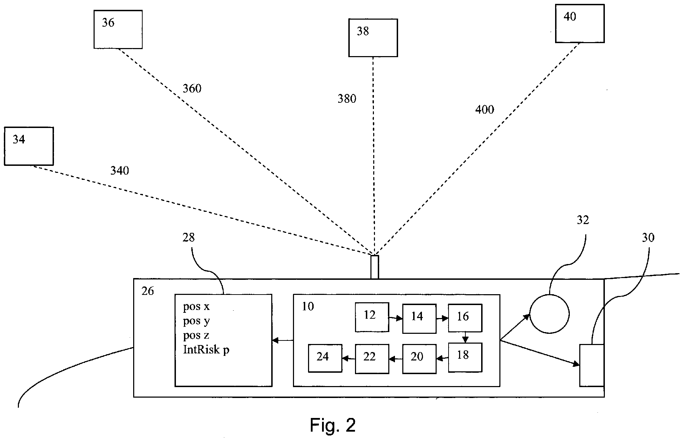

Fig. 1 zeigt in einem Flussdiagramm den Ablauf des erfindungsgemäßen Verfahrens zum Ermitteln des Integritätsrisikos an einer Alarmschranke von einer mit einem Satellitennavigationssystem ermittelten Positionslösung. Die einzelnen Schritte des Verfahrens werden nun im Folgenden in Zusammenhang mit der in Fig. 2 gezeigten Situation erläutert, in der eine Positionsbestimmungsvorrichtung 26, beispielsweise eine Navigationsvorrichtung für Flugzeuge, Signale 340, 360, 380 und 400 von vier Satelliten 34, 36, 38 bzw. 40 eines Satellitennavigationssystems wie Galileo empfängt und für die Positionsbestimmung und die Ermittlung eines Integritätsrisikos an einer Alarmschranke verarbeitet.

Mit den Signalen 340, 360, 380 und 400 werden die üblichen von Satellitennavigationssystemen zur Positionsbestimmung bereitgestellten Daten wie Sendezeit, Bahndaten des sendenden Satelliten, Ephemeriden aller Satelliten etc. übertragen. Ferner werden wie bei Galileo Integritätsdaten wie SISA und SISMA der Satellitensignale in einem Integritätsdatenstrom mit den Signalen übertragen.

Die Positionsbestimmungsvorrichtung 26 enthält einen (nicht explizit dargestellten) Empfänger für die Signale 340, 360, 380 und 400, der in der üblichen und an sich bekannten Weise die mit den Signalen übermittelten Daten dekodiert und zur weiteren Verarbeitung, insbesondere zu Positionsbestimmung durch einen (nicht dargestellten) Kontroller bereitgestellt. Der Kontroller ist hierzu derart konfiguriert, dass er anhand der Daten die aktuelle Position der Vorrichtung 26 ermittelt. Die so ermittelte Position wird im Kontext der vorliegenden Erfindung als Positionslösung bezeichnet.

Weiterhin weist die Vorrichtung 26 eine Vorrichtung 10 zum Ermitteln des Integritätsrisikos an einer Alarmschranke auf. Die Vorrichtung 10 kann beispielsweise in Hardware in Form einer integrierten Schaltung implementiert sein, oder durch eine programmierbaren Prozessor, der durch eine das erfindungsgemäße Verfahren implementierende Software derart konfiguriert wird, dass er das Integritätsrisikos an einer Alarmschranke gemäß der Erfindung ermitteln kann. Die Vorrichtung kann prinzipiell auch durch den Kontroller realisiert werden, der für die Ermittlung der Positionslösung vorgesehen ist. In diesem Fall kann beispielsweise eine Firmware der Positionsbestimmungsvorrichtung 26 derart ausgebildet sein, dass sie zusätzliche Funktionen zum Ermitteln des Integritätsrisikos an einer Alarmschranke enthält.

Die Vorrichtung 10 implementiert mehrere Funktionen eines Algorithmus zum Ermitteln des Integritätsrisikos an einer Alarmschranke, der nun unter Bezug auf das in Fig. 1 dargestellt Flussdiagramm beschrieben wird.

Der Algorithmus bestimmt in Schritt S10 einen Satelliten j, der als fehlerbehaftet angenommen wird, sich also im eingangs geschilderten Zustand 2 gemäß dem Galileo-Integritätskonzept befindet. Für die weitere Erläuterung sei angenommen, dass der Satellit 36 als fehlerbehaftet angenommen wird. Für die Einstufung eines Satelliten als fehlerbehaftet können beispielsweise die SISA- und SISMA-Werte ausgewertet werden, die vom Bodensegment des Satellitennavigationssystems ermittelt und mit dem Integritätsdatenstrom übertragen werden. Beispielsweise kann anhand der SISA- und SISMA-Werte für jeden Satelliten der entsprechende Grundfehler TH gemäß der folgenden Gleichung berechnet wird:

$$TH = k_{pfa} \cdot \sqrt{SISA^2 + SISMA^2}$$

wobei der Vorfaktor $k_{pfa}$ durch eine erlaubte Falschalarmrate bestimmt wird. Als fehlerbehafteter Satellit kann dann der Satellit mit dem größten Grundfehler ausgewählt werden.

Anschließend berechnet der Algorithmus unter der Annahme des fehlerbehafteten Satelliten 36 im Schritt S12 ein erstes Integritätsrisiko PHMI(AL) an einer vorher festgelegten Alarmschranke AL, die beispielsweise insbesondere von einem Nutzer abhängig von der Anwendung vorgegeben werden kann, in der die Positionslösung verwendet werden soll. Das Integritätsrisiko kann hierbei gemäß dem eingangs erläuterten Galileo-Nutzer-Integritätskonzept berechnet werden, wie es in der Veröffentlichung "The Galileo Integrity Concept", V. Oehler, F. Luongo, J.-P. Boyero, R. Stalford, H. L. Trautenberg, ION GNSS 17th International Technical Meeting of the Satellite Division, 21-24 Sept. 2004, Long Beach, CA, in der veröffentlichten europäischen Patentanmeldung EP 1 637 899 A1 und dem erteilten europäischen Patent EP 1 792 196 B1 im Detail beschrieben ist. In der Vorrichtung 10 können hierzu erste Integritätsberechnungsmittel 12 vorgesehen sein, die beispielsweise in Form einer speziellen Berechnungseinheit in Hardware oder in Software implementiert sein können.

Im nächsten Schritt S14 wird eine erste Positionslösung Pos1 mit den von allen vier Satelliten 34, 36, 28 und 40 empfangenen Signalen 340, 360, 380 und 400 ermittelt, also inklusive des Signals 360 des als fehlerbehaftet eingestuften Satelliten 36. Der Schritt S14 kann in der Vorrichtung 10 durch erste Positionsbestimmungsmittel 14 ausgeführt werden, die wiederum in Hard- oder Software implementiert sein können.

Im Schritt S16 wird ferner eine zweite Positionslösung Pos2 ohne das Signal 360 des als fehlerbehaftet eingestuften Satelliten 36, also nur mit den drei Signalen 340, 380 und 400 der Satelliten 34, 38 bzw. 40 ermittelt. Auch für den Schritt S16 können zweite Positionsbestimmungsmittel 16 vorgesehen sein, die in Hard- oder Software implementiert sein können.

Sowohl die ersten als auch die zweiten Positionsbestimmungsmittel 14 und 16 können auch vom oben erwähnten Kontroller implementiert sein.

Im Schritt S18 wird nun eine Differenz ΔPos aus den beiden ermittelten Positionslösungen Pos1 und Pos2 berechnet. Dieser Schritt kann durch Positionsdifferenzberechnungsmittel 18 der Vorrichtung 10 ausgeführt werden, die in Hard- oder Software implementiert sein können.

Die Differenz ΔPos wird im Schritt S20 von der festgelegten Alarmschranke AL subtrahiert, so dass ein reduzierte Alarmschranke ALred erhalten wird. zur Durchführung des Schritts S20 können in der Vorrichtung 10 in Hard- oder Software implementierte Alarmschrankenbildungsmittel 20 vorgesehen sein.

Nun wird ein zweites Integritätsrisiko PHMI(ALred) mit den drei Satelliten 34, 38 und 40, die durch den Zustand 1 beschrieben sind, an der reduzierten Alarmschranke ALred im Schritt S22 berechnet, der von zweiten Integritätsberechnungsmitteln 22 ausgeführt werden kann. Das zweite Integritätsrisiko kann wieder gemäß dem eingangs erläuterten und in den vorgenannten Veröffentlichungen beschriebenen Galileo-Nutzer-Integritätskonzept ermittelt werden.

Im Folgenden wird das Minimum der beiden berechneten Integritätsrisiken PHMI(AL) und PHMI(ALred) ermittelt. Hierzu wird im Schritt S24 geprüft, ob das erste Integritätsrisiko PHMI(AL) größer als das zweite Integritätsrisiko PHMI(ALred) ist. Falls ja, wird mit Schritt S26 fortgefahren und das zweite Integritätsrisiko PHMI(ALred) für die Ermittlung des Integritätsrisikos an der Alarmschranke verwendet. Falls das erste Integritätsrisiko PHMI(AL) kleiner als das zweite Integritätsrisiko PHMI(ALred) ist, wird im Schritt S28 das erste Integritätsrisiko PHMI(AL) für die Ermittlung des Integritätsrisikos an der Alarmschranke verwendet. Die Schritte D24, S26 und S28 können von in Hard- oder Software implementierten Integritätsrisikoermittlungsmitteln 24 der Vorrichtung 10 durchgeführt werden.

Das von der Positionsbestimmungsvorrichtung 26 kleinere der beiden wie vorstehend beschrieben ermittelten Integritätsrisiken kann über Ausgabemittel ausgegeben werden, insbesondere auf einer Anzeigeeinrichtung 28 wie einem LCD-Display angezeigt, über eine Audioausgabeeinheit 32 beispielsweise als Warnton und/oder über eine Datenausgabeschnittstelle 30 zur Weiterverarbeitung durch andere Vorrichtungen oder Steuerung von anderen Vorrichtungen. Beispielsweise können auf Satellitennavigation basierende Steuerungen wie Autopiloten oder Pilotenassistenzsysteme oder System zur Weiterverarbeitung der ermittelten Position durch das ausgegebene Integritätsrisiko beeinflusst werden. Insbesondere kann beispielsweise eine automatische Navigation bei einem zu hohen Integritätsrisiko abgebrochen oder Navigationsinstrumente, die auf Satellitennavigation basieren, auf einen von der Satellitennavigation unabhängigen Betrieb bei einem zu hohen Integritätsrisiko umgeschaltet werden.

Die vorliegende Erfindung ermöglicht es, die Verfügbarkeit einer mit einem Satellitennavigationssystem ermittelten Positionslösung mit einem Integritätsrisiko an einer Alarmschranke zu erhöhen, indem der ungewichtete Beitrag zum Integritätsrisiko an der Alarmschranke unter der Annahme, dass ein Satellit fehlerbehaftet ist, unter zwei verschieden Annahmen berechnet und das Minimum der beiden berechneten Beiträge verwendet wird.

BEZUGSZEICHEN UND AKRONYME

| 10 | Vorrichtung zum Ermitteln des Integritätsrisikos an einer Alarmschranke |
| 12 | erste Integritätsberechnungsmittel |
| 14 | erste Positionsbestimmungsmittel |
| 16 | zweite Positionsbestimmungsmittel |
| 18 | Positionsdifferenzberechnungsmittel |
| 20 | Alarmschrankenbildungsmittel |
| 22 | zweite Integritätsberechnungsmittel |
| 24 | Integritätsrisikoermittlungsmittel |
| 26 | Positionsbestimmungsvorrichtung |
| 28 | Anzeigeeinrichtung |
| 30 | Datenausgabeschnittstelle |
| 32 | Audioausgabeeinheit |
| 34 | erster Satellit |
| 340 | erstes Satellitensignal |
| 36 | zweiter Satellit |
| 360 | zweites Satellitensignal |
| 38 | dritter Satellit |
| 380 | drittes Satellitensignal |
| 40 | vierter Satellit |
| 400 | viertes Satellitensignal |

**Patentansprüche**

1.   Verfahren zum Ermitteln des Integritätsrisikos an einer Alarmschranke von einer mit einem Satellitennavigationssystem ermittelten Positionslösung, wobei von Satelliten des Satellitennavigationssystems empfangene Signale zum Ermitteln der Positionslösung verarbeitet werden und das Verfahren die folgenden Schritte aufweist:

   - Berechnen eines ersten Integritätsrisikos an der Alarmschranke unter der Annahme, dass ein Satellit j der Satelliten fehlerbehaftet ist (S10, S12);
   - Ermitteln einer ersten Positionslösung mit den von allen Satelliten empfangenen Signalen (S14);
   - Ermitteln einer zweiten Positionslösung mit den von allen Satelliten empfangenen Signalen außer dem vom Satelliten j empfangenen Signal (S16);
   - Ermitteln einer Differenz zwischen der ersten und der zweiten Positionslösung (S18);
   - Bilden einer reduzierten Alarmschranke durch Subtrahieren der ermittelten Differenz von der Alarmschranke (S20);
   - Berechnen eines zweiten Integritätsrisikos an der reduzierten Alarmschranke mit den von allen Satelliten empfangenen Signalen außer dem vom Satelliten j empfangenen Signal (S22); und
   - Ermitteln des Integritätsrisikos an der Alarmschranke unter Verwendung des Minimums des ersten und des zweiten Integritätsrisikos (S24, S26, S28).

**2.** Verfahren nach Anspruch 1,
**dadurch gekennzeichnet, dass**
das Integritätsrisiko an der Alarmschranke unter Verwendung des Minimums des ersten und des zweiten Integritätsrisikos als ungewichteten Beitrag gemäß dem Nutzer-Integritätskonzept des Satellitennavigationssystems Galileo ermittelt wird.

**3.** Verfahren nach Anspruch 1 oder 2,
**dadurch gekennzeichnet, dass**
vom Satellitennavigationssystem bereitgestellte statistische Beschreibungen bezüglich Signalfehlern jedes Satelliten verarbeitet werden, indem daraus für einen fehlerbehafteten Satelliten ein Grundfehler ermittelt wird, der für die Einstufung eines Satelliten als fehlerbehaftet ausgewertet wird.

**4.** Verfahren nach Anspruch 3,
**dadurch gekennzeichnet, dass**
als statistische Beschreibungen bezüglich Signalfehlern jedes Satelliten

- der erwartete Signalfehler bzw. der Signal In Space Accuracy SISA-Wert für jedes Satellitensignal und
- die Genauigkeit der Schätzung des Signalfehlers bzw. der Signal-In-Space-Monitöring-Accuracy SISMA-Wert für jedes Satellitensignal

verarbeitet werden, indem für jeden Satelliten der Grundfehler TH gemäß der folgenden Gleichung berechnet wird:

$$TH = k_{pfa} \cdot \sqrt{SISA^2 + SISMA^2}$$

wobei der Vorfaktor $k_{pfa}$ durch eine erlaubte Falschalarmrate bestimmt wird.

**5.** Computerprogramm mit Programmcode zur Durchführung aller Verfahrensschritte nach einem der vorhergehenden Ansprüche, wenn das Computerprogramm in einem Computer ausgeführt wird.

**6.** Datenträger, auf dem der von einem Computer ausführbare Programmcode des Computerprogramms nach Anspruch 5 gespeichert ist.

**7.** Vorrichtung (10) zum Ermitteln des Integritätsrisikos an einer Alarmschranke von einer mit einem Satellitennavigationssystem ermittelten Positionslösung, wobei die Vorrichtung zum Verarbeiten von von Satelliten des Satellitennavigationssystems empfangenen Signalen zum Ermitteln der Positionslösung ausgebildet ist und folgendes aufweist:

- erste Mittel (12) zum Berechnen eines ersten Integritätsrisikos an der Alarmschranke unter der Annahme, dass ein Satellit j der Satelliten fehlerbehaftet ist (S10, S12),
- zweite Mittel (14) zum Ermitteln einer ersten Positionslösung mit den von allen Satelliten empfangenen Signalen (S14),
- dritte Mittel (16) zum Ermitteln einer zweiten Positionslösung mit den von allen Satelliten empfangenen Signalen außer dem vom Satelliten j empfangenen Signal (S16),
- vierte Mittel (18) zum Ermitteln einer Differenz zwischen der ersten und der zweiten Positionslösung (S18),
- fünfte Mittel (20) zum Bilden einer reduzierten Alarmschranke durch Subtrahieren der ermittelten Differenz von der Alarmschranke (S20),
- sechste Mittel (22) zum Berechnen eines zweiten Integritätsrisikos an der reduzierten Alarmschranke mit den von allen Satelliten empfangenen Signalen außer dem vom Satelliten j empfangenen Signal (S22) und
- siebte Mittel (24) zum Ermitteln des Integritätsrisikos an der Alarmschranke unter Verwendung des Minimums des ersten und des zweiten Integritätsrisikos (S24, S26, S28).

**8.** Vorrichtung nach Anspruch 7,
**dadurch gekennzeichnet, dass**
die ersten bis siebten Mittel zumindest teilweise durch einen programmierbaren Prozessor und ein in einem Speicher abgelegtes Programm zum Konfigurieren des programmierbaren Prozessors zum Durchführen eines oder mehrerer Schritte eines Verfahrens nach einem der Ansprüche 1 bis 4 implementiert sind.

**9.** Positionsbestimmungsvorrichtung (26) zum Ermitteln einer Position anhand von Signalen eines Satellitennavigationssystems und zum Ermitteln eines Integritätsrisikos an einer Alarmschranke für die ermittelte Position, wobei die Positionsbestimmungsvorrichtung eine Vorrichtung (10) nach Anspruch 7 oder 8 und ein Ausgabemittel (28, 30, 32) zum Ausgeben eines ermittelten Integritätsrisikos aufweist.

**10.** Positionsbestimmungsvorrichtung nach Anspruch 9,
**dadurch gekennzeichnet, dass**
das Ausgabemittel ein oder mehreres der folgenden Mittel aufweist:

eine Anzeigeeinrichtung (28); eine Datenausgabeschnittstelle (30); eine Audioausgabeeinheit (32).

**Claims**

1. A method for determining an integrity risk at an alert limit of a position solution determined by a satellite navigation system, wherein signals received from satellites of the satellite navigation system are processed for determining the position solution, the method comprising:

   - calculating a first integrity risk at the alert limit assuming that one satellite j of the satellites is faulty (S10, S12);
   - determining a first position solution is determined with signals received from all of the satellites (S14);
   - determining a second position solution with signals received from all of the satellites except for a signal received from the assumed faulty satellite j (S16);
   - determining a difference between the first and the second position solution (S18);
   - creating a reduced alert limit by subtracting the determined difference from the alert limit (S20);
   - calculating a second integrity risk at the reduced alert limit with the signals received from all satellites except the signal received from the assumed faulty satellite j (S22); and
   - determining the integrity risk at the alert limit using a lower of the first and second integrity risks (S24, S26, S28).

2. The method in accordance with claim 1, **characterized in that** the integrity risk at the alert limit is determined using the minimum of the first and second integrity risks as an unweighted contribution in accordance with a user integrity concept of a Galileo satellite navigation system.

3. The method in accordance with claim 1 or 2, **characterized in that** statistical descriptions provided by the satellite navigation system regarding signal errors of each satellite are processed and a basic error for an assumed faulty satellite is determined therefrom, and the basic error is evaluated as faulty for classification of a satellite.

4. The method in accordance with claim 3, **characterized in that**

   - an expected signal error or Signal in Space Accuracy SISA value for each satellite signal and
   - an accuracy of the estimate of the signal error or a Signal in Space Monitoring Accuracy SISMA value for each satellite signal

are processed as statistical descriptions of signal errors for each satellite,
wherein for each satellite the basic error TH is calculated according to the following equation:

$$TH = k_{pfa} \cdot \sqrt{(SISA^2 + SISMA^2)}$$

wherein the prefactor $k_{pfa}$ is determined by an allowed false alert rate.

5. A computer program having a program code for performing the method steps in accordance with the foregoing claims, when the computer program is run on a computer.

6. A medium for storing the computer readable program code of the computer program in accordance with claim 5.

7. An apparatus (10) for determining an integrity risk at an alert limit of a position solution determined by a satellite navigation system, wherein the apparatus is configured to process signals received from satellites of the satellite navigation system for determining the position solution, the apparatus comprising:

   - first means (12) configured to calculate a first integrity risk at the alert limit assuming that one satellite j of the satellites is faulty (S10, S12),
   - second means (14) configured to determine a first position solution is determined with signals received from all of the satellites (S14),
   - third means (16) configured to determine a second position solution with signals received from all of the satellites except for a signal received from the assumed faulty satellite j (S16),
   - fourth means (18) configured to determine a difference between the first and the second position solution (S18),
   - fifth means (20) configured to create a reduced alert limit by subtracting the determined difference from the alert limit (S20),
   - sixth means (22) configured to calculate a second integrity risk at the reduced alert limit with the signals received from all satellites except the signal received from the assumed faulty satellite j (S22), and
   - seventh means (24) configured to determine the integrity risk at the alert limit using a lower of the first and second integrity risks (S24, S26, S28).

8. The apparatus in accordance with claim 9, **characterized in that** the first through seventh means are at least partially implemented, by a programmable processor and a program stored in a memory for configuring the programmable processor, to perform one or more of the steps of the method in accordance with one of claims 1 to 4.

9. A position calculation device (26) configured to determine a position by signals of a satellite navigation system and to determine an integrity risk at an alarm limit for the determined position, wherein the position calculation device has an apparatus (10) in accordance with claim 7 or 8 and an output device (28, 30, 32) configured to output a determined integrity risk.

10. The apparatus in accordance with claim 9, **characterized in that** the output device is a display unit (28), a data output interface (30) and/or an audio output unit (32).

**Revendications**

1. Procédé pour calculer le risque d'intégrité à une barrière d'alarme pour une solution de position calculée par un système de navigation par satellites, des signaux reçus par des satellites du système de navigation par satellites étant traités pour calculer la solution de position, et ce procédé comportant les étapes suivantes :

    - le calcul d'un premier risque d'intégrité à la barrière d'alarme en partant de l'hypothèse qu'un satellite j des satellites est défaillant (S10, S12) ;
    - la détermination d'une première solution de position à partir des signaux (S14) reçus par tous les satellites ;
    - la détermination d'une deuxième solution de position à partir des signaux reçus par tous les satellites, à l'exception du signal (S16) reçu par le satellite j ;
    - le calcul d'une différence entre la première et la deuxième solution de position (S18) ;
    - la constitution d'une barrière d'alarme réduite par soustraction de la différence calculée de la barrière d'alarme (S20) ;
    - le calcul d'un deuxième risque d'intégrité à la barrière d'alarme réduite à partir des signaux reçus par tous les satellites, à l'exception du signal (S22) reçu parle satellite j ; et
    - le calcul du risque d'intégrité à la barrière d'alarme en utilisant le risque minimum du premier et du deuxième risque d'intégrité (S24, S26, S28).

2. Procédé selon la revendication 1, **caractérisé en ce que** le risque d'intégrité à la barrière d'alarme est calculé en utilisant le risque minimum du premier et du deuxième risque d'intégrité en tant que contribution non pondérée selon le concept d'intégrité pour utilisateur du système de navigation par satellites Galileo.

3. Procédé selon la revendication 1 ou 2, **caractérisé en ce que** le traitement des descriptions statistiques relatives aux erreurs de signal de chaque satellite et fournies par le système de navigation par satellites sert à détecter une erreur fondamentale pour un satellite défaillant, lequel est estimé comme étant défaillant pour l'évaluation d'un satellite.

4. Procédé selon la revendication 3, **caractérisé en ce que** le traitement pour chaque satellite

    - de l'erreur de signal attendue ou de la valeur de SISA (Signal-In-Space Accuracy) pour chaque signal de satellite et
    - de la précision d'évaluation de l'erreur de signal ou de la valeur de SISMA (Signal-In-Space Monitoring Accuracy) pour chaque signal de satellite en tant que descriptions statistiques relatives aux erreurs de signal de chaque satellite,

sert à calculer l'erreur fondamentale TH selon l'équation suivante :

$$TH = k_{pfa} \cdot \sqrt{SISA^2 + SISMA^2}$$

le facteur $k_{pfa}$ étant déterminé par un taux de fausse alarme autorisé.

5. Programme d'ordinateur avec code de programme pour exécuter toutes les étapes de procédé selon l'une des revendications précédentes lorsque le programme d'ordinateur tourne sur un ordinateur.

6. Support de données sur lequel le code du programme d'ordinateur exécutable par ordinateur est enregistré selon la revendication 5.

7. Dispositif (10) pour calculer le risque d'intégrité à une barrière d'alarme pour une solution de position calculée par un système de navigation par satellites, ce dispositif étant conçu pour traiter des signaux reçus par des satellites du système de navigation par satellites et présentant ce qui suit :

    - des premiers moyens (12) pour calculer un premier risque d'intégrité à une barrière d'alarme en partant de l'hypothèse qu'un satellite j des satellites est défaillant (S10, S12),
    - des deuxièmes moyens (14) pour calculer une première solution de position à partir des signaux (S14) reçus par tous les satellites,

- des troisièmes moyens (16) pour calculer une deuxième solution de position à partir des signaux reçus par tous les satellites, à l'exception du signal (S16) reçu par le satellite j.

- des quatrièmes moyens (18) pour calculer une différence entre la première et la deuxième solution de position (S18),

- des cinquièmes moyens (20) pour former une barrière d'alarme réduite par soustraction de la différence calculée de la barrière d'alarme (S20),

- des sixièmes moyens (22) pour calculer un deuxième risque d'intégrité à la barrière d'alarme réduite à partir des signaux reçus par tous les satellites, à l'exception du signal (S22) reçu par le satellite j et

- des septièmes moyens (24) pour calculer le risque d'intégrité à la barrière d'alarme en utilisant le risque minimum du premier et du deuxième risque d'intégrité (S24, S26, S28).

8. Dispositif selon la revendication 7,
   **caractérisé en ce que**
   les premiers aux septièmes moyens sont implémentés au moins partiellement par un processeur programmable et par un programme stocké dans une mémoire et destiné à la configuration du processeur programmable afin d'exécuter une ou plusieurs étapes d'un procédé selon l'une des revendications 1 à 4.

9. Dispositif de détermination de position (26) servant à déterminer une position à partir de signaux d'un système de navigation par satellites et à calculer un risque d'intégrité à une barrière d'alarme pour la position déterminée, ce dispositif de détermination de position présentant un dispositif (10) selon la revendication 7 ou 8 et un moyen de sortie (28, 30, 32) servant à émettre un risque d'intégrité calculé.

10. Dispositif de détermination de position selon la revendication 9,
    **caractérisé en ce que**
    le moyen de sortie présente un ou plusieurs des moyens suivants : un dispositif d'affichage (28) ; une interface de sortie de données (30) ; une unité de sortie audio (32).

START

S10

Satellit j = fehlerbehaftet

S12

Berechnen eines ersten Integritätsrisikos
PHMI(AL) an der Alarmschranke AL

S14

Ermitteln einer ersten Positionslösung Pos1 mit
Signalen aller n Satelliten

S16

Ermitteln einer zweiten Positionslösung Pos2
mit Signalen aller n Satelliten außer dem Signal
von Satellit j

S18

$\Delta Pos = Pos1 - Pos2$

S20

$ALred = AL - \Delta Pos$

S22

Berechnen eines zweiten Integritätsrisikos
PHMI(ALred) an der reduzierten Alarmschranke
ALred

S24

PHMI(AL)>
PHMI(ALred)

Ja          Nein

S26                                      S28

PHMIred(AL) -> PHMI          PHMI(AL) -> PHMI

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1637899 A1
- EP 1792196 B1

- EP 2402785 A1


**In der Beschreibung aufgeführte Nicht-Patentliteratur**

- **V. OEHLER ; F. LUONGO ; J.-P. BOYERO ; R. STALFORD ; H. L. TRAUTENBERG.** The Galileo Integrity Concept. *ION GNSS 17th International Technical Meeting of the Satellite Division,* 21. September 2004

- **V. OEHLER ; F. LUONGO ; J.-P. BOYERO ; R. STALFORD ; H. L. TRAUTENBERG.** ION GNSS 17th International Technical Meeting of the Satellite Division. *The Galileo Integrity Concept,* 21. September 2004